# EUROPÄISCHE PATENTANMELDUNG

(11) **EP 3 543 264 A1**
(43) Veröffentlichungstag der Anmeldung: **25.09.2019**
(21) Anmeldenummer: 18163276.1
(22) Anmeldetag: 22.03.2018
(51) Int. Cl.: C08F 222/10, C04B 40/06, F16B 13/14

(54) **SYSTEM ZUR BEFESTIGUNG EINES KONSTRUKTIONSELEMENTS UND VERFAHREN ZUM BEFESTIGEN DES KONSTRUKTIONSELEMENTS**

(71) Anmelder: HILTI Aktiengesellschaft, 9494 Schaan (LI)
(72) Erfinder: BÜRGEL, Thomas, 86899 Landsberg (DE)
(74) Vertreter: Hilti Aktiengesellschaft Corporate Intellectual Property

(57) **Zusammenfassung**

Die Erfindung betrifft ein System zur Befestigung eines Konstruktionselements in einer in einen tragfähigen Untergrund eingebrachten Öffnung, einer härtbaren Mörtelmasse, die durch Einwirken von aktinischer Strahlung aktivierbar ist; undeinem Konstruktionselement, das einen Befestigungsabschnitt umfasst, der wenigstens eine aktinische Strahlung emittierende Strahlungsquelle aufweist. Nach Aktivieren der in der Öffmnung mit der Strahlungsquelle in Kontakt stehenden Mörtelmasse durch die aktinische Strahlung härtet die Mörtelmasse unter Frontalpolymerisation aus.

## Beschreibung

### GEBIET DER ERFINDUNG

Die Erfindung betrifft ein System zur Befestigung eines Konstruktionselements in einer Öffnung, insbesondere in Bohrlöchern. Außerdem betrifft die Erfindung ein Verfahren zur Befestigung des Konstruktionselements in einer Öffnung unter Verwendung des Systems.

### HINTERGRUND DER ERFINDUNG

Zur Befestigung von Konstruktionselementen wie Ankerstangen, Betoneisen oder ähnlichen Elementen in einer in einem tragfähigen Untergrund eingebrachten Öffnung werden normalerweise Zweikomponenten-Reaktionsharzmörtel auf Basis von (Meth)acrylaten oder Epoxidharzen verwendet. Diese Reaktionsharzmörtel weisen nach dem Vermischen der miteinander reagierenden Bestandteile eine gewisse Topfzeit auf, während der das zu befestigende Element gesetzt werden kann, und erreichen nach Ablauf einer weiteren Zeitspanne ihre Endfestigkeit. Die Topfzeit liegt unter üblichen Bedingungen auf der Baustelle im Bereich einiger Minuten und die Aushärtung erfolgt in der Regel innerhalb von einigen Minuten bis Stunden. Eine längere Topfzeit führt im Allgemeinen auch zu einer längeren Aushärtungszeit, wobei die jeweiligen Zeiten in Abhängigkeit von den Umgebungsbedingungen, insbesondere der Temperatur, variieren können.

Aus der DE 39 40 309 A1 ist ein Reaktionsharzmörtel zur Befestigung von Verankerungen bekannt, der radikalisch härtbare Vinylesterurethane als Bindemittel enthält und Befestigungen mit hervorragender Beständigkeit und Festigkeit liefert.

Gegenstand der DE 42 31 161 A1 ist ein Zweikomponenten-Reaktionsharzmörtel zur Befestigung von Verankerungsmitteln in Bohrlöchern, der einen Gehalt an härtbaren Verbindungen auf anorganischer und organischer Grundlage und einen oder mehrere Härter umfasst, und der aufgrund seines Gehaltes an härtbaren Vinylestern und hydraulisch abbindenden und/oder polykondensierbaren Verbindungen eine außerordentlich günstige Lagerfähigkeit aufweist, sowie zusätzlich eine verringerte Schrumpfneigung, erhöhte Wärmeformbeständigkeit, ein verbessertes Brandverhalten, eine Beständigkeit gegen klimatische Bedingungen, höhere Verbundfestigkeit, einen günstigen Ausdehnungskoeffizienten, ein zufriedenstellendes Langzeitverhalten und eine hohe Temperaturwechselbeständigkeit.

Die DE 43 15 788 A1 offenbart Dübelharze zur Befestigung von Ankern in festen Körpern, die in einer Ampulle oder Kartusche vorliegen und als Bindemittel radikalisch nicht polymerisierbare Polymere, Reaktivverdünner mit mindestens zwei (Meth)acrylatgruppen, andere Reaktivverdünner, Reaktivverdünner mit einem Siedepunkt von 180°C, andere Polymere und ein nicht reaktives Lösungsmittel enthalten. Diese Dübelharze erlauben es, die im Stand der Technik üblichen Haltewerte zu erreichen, sind sicher in ihrer Handhabung, enthalten weniger giftige Komponenten und sind in ihren physikalischen Eigenschaften auf den jeweiligen Anwendungszweck anpassbar.

Da auf Baustellen, wo solche Konstruktionselemente üblicherweise gesetzt werden, kaum bei optimalen Bedingungen gearbeitet werden kann, ergeben sich unterschiedliche Zeiträume zwischen dem Ansetzen des aushärtenden Mörtelgemisches und der Einführung der Konstruktionselemente, beispielsweise wenn mehrere Bohrlöcher zunächst mit Mörtelmasse beschickt und dann die Konstruktionselemente nacheinander eingeführt werden. Vor allem bei hohen Temperaturen im Sommer kann dies zu einem vorzeitigen Aushärten der Mörtelmasse führen, so dass das Bohrloch nicht mehr genutzt werden kann.

Zur Überwindung der Temperaturabhängigkeit von Topfzeit und/oder Aushärtungszeit schlägt das deutsche Patent DE 100 02 367 C1 Reaktionsharzmörtel vor, die durch Frontalpolymerisation nach Wärmeinitiierung aushärtbar sind und die neben einem polymerisierbaren Monomeren oder härtbaren Harz und gegebenenfalls mindestens einem Füllstoff zusätzlich einen bei einer Temperatur von oberhalb 30°C thermisch aktivierbaren und/oder thermisch freisetzbaren Polymerisationsinitiator für das Monomere und/oder einen thermisch aktivierbaren Härtungsbeschleuniger für das härtbare Harz enthalten, wobei Art und Menge von Monomeren und/oder Harz einerseits und Polymerisationsinitiator und/oder Härtungsbeschleuniger andererseits derart ausgewählt sind, dass sich nach dem Auslösen der Polymerisation eine Geschwindigkeit der Polymerisationsfront (Frontgeschwindigkeit) von mindestens 10 cm/min ergibt.

Die WO 2017/035551 A1 offenbart ein Verfahren zur radikalisch induzierten kationischen Frontalpolymerisation von kationisch polymerisierbaren Monomeren wie Epoxidharzen mittels einer Kombination aus einem kationischen Polymerisationsinitiator, der mittels UV/VIS-Strahlung aktiviert wird, und mindestens einem Aktivator für den zumindest einen Initiator, wobei Benzpinakol als Aktivator eingesetzt wird. Es wird auch der Einsatz eines solchen Systems als chemischer Dübel offenbart.

Die bekannten Verfahren unter Verwendung von lagerstabilen durch Frontalpolymerisation härbaren Mörtelmassen zeichen sich dadurch aus, dass die Frontalpolymerisation außerhalb der Verankerung gestartet wird und durch den engen Ringspalt zwischen Öffnung und Konstruktionselement in die Öffnung eindringen muss. Bei besonders engen Stellen, wenn beispielsweise das Konstruktionselement oder das Bohrloch nicht perfekt gerade sind oder Fehlstellen in der Mörtelmasse wie zum Beispiel Luftblasen vorliegen, kann die Polymerisationsfront abbrechen, was zu einer unvollständigen Aushärtung führt.

Aus der DE 10 2015 122 950 A1 ist ein Verbundanker zum Verankern eines Befestigungselements bekannt, der ein strahlungshärtbares Reaktivharz und eine Strahlungsquelle für elektromagnetische Strahlung umfasst, wobei die Strahlungsquelle innerhalb des Verankerungsbereichs angeordnet sein soll. Die Zusammensetzung des Reaktivharzes ist nicht beschrieben. Wegen der geringen Eindringtiefe der elektromagnetischen Strahlung in das Reaktivharz muss die Belichtung während der gesamten Aushärtedauer erfolgen. Außerdem muss eine große belichtete Fläche bereitgestellt werden, um eine zuverlässige Aushärtung des Reaktivharzes zu erreichen. Dadurch kann die Auszugsfestigkeit des Verbundankers beeinträchtigt werden.

### ZUSAMMENFASSUNG DER ERFINDUNG

Aufgabe der Erfindung ist es daher, ein System und ein Verfahren zur gleichmäßigen und zeitlich steuerbaren Aushärtung von Mörtelmassen zum Befestigen von Konstruktionselementen bereitzustellen. Das System soll eine schnelle und vollständige Aushärtung von Mörtelmassen mit hoher Verbundspannung gewährleisten. Ferner sollen die Mörtelmassen über einen längeren Zeitraum lagerstabil sein.

Die der Erfindung zu Grunde liegende Aufgabe wird durch ein System gemäß Anspruch 1 gelöst. Gegenstand der Erfindung ist weiterhin eine Verfahren zur Befestigung eines Konstruktionselements in einer Öffnung gemäß Anspruch 15.

Bevorzugte Ausführungsformen des erfindungsgemäßen Systems und des Verfahrens sind in den Unteransprüchen angegeben, die wahlweise miteinander kombiniert werden können.

Das System zur Befestigung eines Konstruktionselements in einer Öffnung umfasst erfindungsgemäß eine durch Frontalpolymerisation härtbare Mörtelmasse, die durch Einwirken von aktinischer Strahlung aktivierbar ist, und ein Konstruktionselement, das einen Befestigungsabschnitt umfasst, der wenigstens eine aktinische Strahlung emittierende Strahlungsquelle aufweist.

Im Stand der Technik sind Mörtelmassen beschrieben, die thermisch oder auch durch UV/Vis-Strahlung aktivierbar sind. Die zusammen mit den Mörtelmassen eingesetzten Befestigungsmittel sind jedoch nicht dazu in der Lage, selbst aktinische Strahlung zu emittieren. Daher muss die Aktivierung der Mörtelmasse nach dem Setzen des Konstruktionselements immer durch Einwirkung von außen auf die schon in die Öffnung eingebrachte Mörtelmasse erfolgen.

Die Erfinder haben erkannt, dass die Aushärtung der Mörtelmasse auch durch das Konstruktionselement selbst gestartet werden kann. Hierdurch kann einerseits der Aushärteprozess genauer gesteuert werden und andererseits kann das Setzen einer Vielzahl von Konstruktionselementen zeitlich koordiniert werden, was gerade auf Baustellen wünschenswert ist.

Ebenso erlaubt das erfindungsgemäße System den Start der Aushärtung, insbesondere einer Aushärtung durch Frontalpolymerisation, innerhalb des Ringspalts, da der Befestigungsabschnitt des Konstruktionselements mit der die aktinische Strahlung emittierenden Strahlungsquelle in die Mörtelmasse eingebracht werden kann, so dass die Strahlungsquelle direkt mit der Mörtelmasse in Kontakt steht. Unter "Ringspalt" wird der Bereich verstanden, der sich zwischen dem in die Öffnung eingebrachten Befestigungsabschnitt des Konstruktionselements und der Innenwandung derÖffnung befindet. Der Ringspalt wird im Wesentlichen vollständig von der Mörtelmasse ausgefüllt. Frontalpolymerisation (self-propagating polymerisation; SFP) bezeichnet eine Polymerisationsreaktion, bei der die Reaktionszone ausgehend von einer lokal begrenzten Aktivierungszone durch das zu polymerisierende Material wandert.

Da der Befestigungsabschnitt des Konstruktionselements selbst die aktinische Strahlung emittiert, muss die Aushärtung durch Frontalpolymerisation nicht von außen gestartet werden und in den Ringspalt eindringen, sondern sie beginnt bereits im Ringspalt innerhalb der Öffnung, was zu einer zuverlässigeren und schnelleren Aushärtung der Mörtelmasse führt. Die ausgehärtete Mörtelmasse weist zudem weniger Fehlstellen auf, da die Polymerisationsfront seltener abbricht und an mehreren Stellen gleichzeitig gestartet werden kann.

Außerdem ist es nicht notwendig, die Strahlungsquellen separat in die Öffnung einzuführen oder weitere Vorrichtungen wie durchstrahlbare Hülsen bereitzustellen, die als Lichtleiter dienen und das Konstruktionselement aufnehmen. Da die Mörtelmasse durch Frontalpolymerisation aushärtet, kann außerdem die Anzahl der Strahlungsquellen reduziert, die belichtete Fläche verkleinert und/oder die Bestrahlungszeit verkürzt werden.

Durch die Photoaktivierung der Mörtelmasse des Systems ist es möglich, eine praktisch beliebige Topfzeit der Mörtelmasse zu erreichen und damit die zur Verabeitung der Masse zur Verfügung stehende Zeit vollständig von der Aushärtungszeit abzukoppeln, da die Aushärtung erst durch Photoaktivierung einsetzt. Hierdurch ist es möglich, das zu befestigende Element noch Stunden nach der Einführung der Mörtelmasse in das Bohrloch zu setzen, zu justieren und die Aushärtung der Mörtelmasse durch Bestrahlung mit aktinischer Strahlung im Bohrloch innerhalb von Sekunden bis zu wenigen Minuten zu bewirken.

Darüber hinaus ermöglicht das erfindungsgemäße System das Einarbeiten von Füllstoffen in die Mörtelmasse, die zum Erreichen hoher Lastwerte vorteilhaft sind. Gefüllte Mörtelmassen zeigen nur eine geringe Eindringtiefe für aktinische Strahlung, insbesondere UV/VIS-Strahlung. Da die Photoaktivierung der Mörtelmassen des erfindungsgemäßen Systems innerhalb der Öffnung durch die in Kontakt mit der Mörtelmasse stehenden Strahlungsquellen auf dem Befestigungsabschnitt des Konstruktionselements erfolgt, wird auch durch die Anwendung von Füllstoffen die schnelle und zuverlässige Aushärtung der Mörtelmasse durch Frontalpolymerisation nicht beeinträchtigt.

Mit dem erfindungsgemäßen System ist es ferner nicht nur möglich, die Frontalpolymerisation der Mörtelmasse der Schwerkraft folgend abwärts zu bewirken. Vielmehr kann die Frontalpolymerisation auch in horizontaler beziehungsweise vertikaler Richtung durchgeführt werden. In dieser Weise wird es durch entsprechende Einstellung der Viskosität der Mörtelmasse möglich, beispielsweise auch in Decken vorliegende, nach unten geöffnete Bohrlöcher mit der Mörtelmasse zu füllen, die Konstruktionselemente einzuführen und die Aushärtung durch Bestrahlen mit aktinischer Strahlung auszulösen.

Bevorzugt wird die Polymerisation der Mörtelmasse durch punktuelles oder flächiges Bestrahlen einer mit dem Befestigungsabschnitt in direktem Kontakt stehenden Schicht der Mörtelmasse mit aktinischer Strahlung ausgelöst. Diese Bestrahlung kann beispielsweise mit Hilfe eines von den Strahlungsquellen auf dem Befestigungsabschnitt ausgehenden Lichtblitzes, eines Laserstrahls oder durch kontinuierliche Bestrahlung mit aktinischer Strahlung unterschiedlicher Wellenlängen erfolgen, insbesondere mit Strahlung einer Wellenlänge im UV/VIS-Bereich von bevorzugt 200 bis 600 nm. Die aktinische Strahlung kann von den Strahlungsquellen abgegeben werden, die am Befestigungsabschnitt des Konstruktionselements angeordnet sind.

Durch Einwirkung von aktinischer Strahlung auf die Mörtelmasse wird ein in der Mörtelmasse enthaltener Photoinitiator unter Bildung von aktiven Spezies wie Radikalen aktiviert und die Polymerisation wird in Gang gesetzt. Die Reaktionswärme der Polymerisation ist ausreichend, um weiteren Photoinitiator und/oder wärmelabile Polymerisationsinitiatioren zu zersetzen und die Polymerisation zu unterhalten, so dass die Polymerisationsreaktion wellenartig entlang einer Polymerisationsfront in der Mörtelmasse voranschreitet.

Weitere Merkmale und Vorteile der Erfindung ergeben sich aus der nachfolgenden ausführlichen Beschreibung der Erfindung, die jedoch nicht in einem einschränkenden Sinn verstanden werden soll.

### KURZE BESCHREIBUNG DER ZEICHUNG

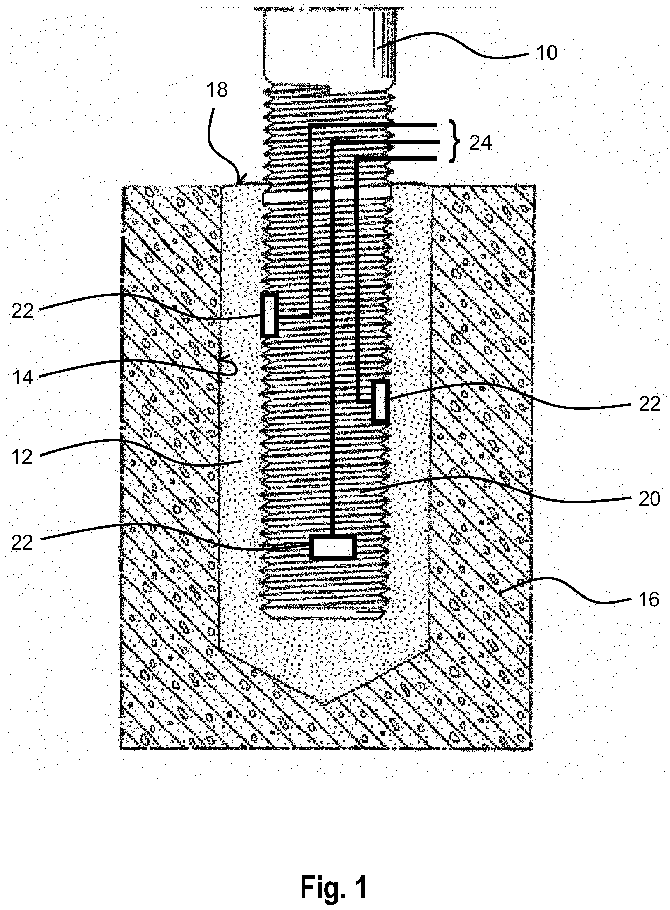

In der beigefügten Zeichnung zeigt die einzige
- Figur 1 eine schematische Darstellung des erfindungsgemäßen Systems zur Befestigung eines Konstruktionselements in einer Öffnung.

### AUSFÜHRLICHE BESCHREIBUNG DER ERFINDUNG

Das in Fig. 1 gezeigte erfindungsgemäße System umfasst ein Konstruktionselement 10, hier in Form einer Ankerstange, das mittels einer härtbaren Mörtelmasse 12 in einer Öffnung 14 befestigt ist. Die Öffnung 14 ist in einen tragfähigen Untergrund 16 eingebracht. Die Mörtelmasse befindet sich in einem zwischen der Öffnung 14 und dem Konstruktionselement gebildeten Ringspalt 18.

Vorzugsweise handelt es sich bei dem Untergrund 16 um einen mineralischen Untergrund, bevorzugt Betonwerk und/oder Mauerwerk. Bevorzugt ist die Öffnung 14 im Untergrund ein Bohrloch, insbesondere ein gebohrtes Dübelloch.

Das Konstruktionselement 10 des erfindungsgemäßen Systems umfasst mindestens einen Befestgungsabschitt 20, der aktinische Strahlung emittieren kann. Vorzugsweise emittiert der Befestigungsabschnitt 20 aktinische Strahlung im UV/VIS-Bereich.

Das Konstruktionselement 10 ist bevorzugt ausgewählt aus einer Ankerstange, einer Gewindestange, einer Gewindehülse, einem Schraubanker, einem Bewehrungseisen, einem Betoneisen oder einer Schraube.

Der Befestigungsabschnitt 20 ist der Abschnit des Konstruktionselements 10, der in die in den Untergrund 16 eingebrachte Öffnung 14 eingeführt wird, und der mit der in der Öffnung 14 befindlichen Mörtelmasse 12 direkt in Kontakt steht. Am Befestigungsabschnitt 20 ist bevorzugt wenigstens eine Strahlungsquelle 22 zur Emission der aktinischen Strahlung vorgesehen, die mit der Mörtelmasse 12 direkt in Kontakt kommt. Hierdurch ist es möglich, dass die Bestrahlung der Mörtelmasse 12 mit Hilfe der Strahlungsquelle 22 im Inneren der Mörtelmasse 12, d. h. innerhalb des zwischen der Öffnung 14 und dem Konstruktionselement 10 gebildeten Ringspalt 18 stattfindet.

Die Strahlungsquelle 22 zur Emission der aktinischen Strahlung ist bevorzugt eine LED, eine Mini-LED und/oder ein Lichtleiter.

Vorzugsweise weist der Befestigungsabschnitt 20 eine Vielzahl an Strahlungsquellen 22 auf, bevorzugt mindestens zwei Strahlungsquellen, bevorzugter mindestens drei Strahlungsquellen und noch bevorzugter mindestens vier Strahlungsquellen. Bevorzugt sind 2-8 Strahlungsquellen 22 am Bestigungsabschnitt 20 vorgesehen, weiter bevorzugt 2-6 und besonders bevorzugt 2-4 Strahlungsquellen.

Besonders bevorzugt weist der Befestigungsabschnitt 20 eine zylindrische Grundform auf, und die Strahlungsquellen 22 sind voneinander beabstandet über eine Mantelfläche der zylindrischen Grundform verteilt. Die Verteilung der Strahlungsquellen 22 auf der Mantelfläche des Befestigungsabschnitts 20 kann regelmäßig oder unregelmäßig sein. Vorzugsweise liegt eine im Wesentlichen regelmäßige Verteilung vor, und die Abstände zwischen zwei jeweils benachbarten Strahlungsquellen 22 sind in etwa gleich. Die Strahlungsquellen 22 können eine beliebige Geometrie aufweisen. Bevorzugt sind die Strahlungsquellen 22 punkt- oder scheibenförmig, streifenförmig oder in Form von konzentrischen Ringen ausgebildet.

Punkt- oder scheibenförmige Strahlungsquellen 22 können in eine entsprechende Aufnahme (nicht gezeigt) eingesetzt werden, die in die Mantelfläche des Befestigungsabschnitts 20 eingebracht sein kann. Streifenförmige Strahlungsquellen 22 können in Längsrichtung des Befestigungsabschnitts 20 verlaufen und in eine oder mehrere in die Mantelfläche des Befestigungsabschnitts 20 eingebrachte Längsnuten eingesetzt werden. Zur Aufnahme der ringförmigen Strahlungsquellen 22 können eine oder mehrere Quernuten am Befestigungsabschnitt 20 vorgesehen sein.

Die Strahlungsquellen 22 können mit Zuleitungen 24 zur Aktivierung der Strahlungsquellen 22 verbunden sein. Bevorzugt ist am oder im Befestigungsabschnitt 20 ein Kanal (nicht gezeigt) gebildet, in dem die Zuleitungen 24 verlegt sind und aus dem Ringspalt 18 geführt werden. Über die Zuleitungen 24 können die Strahlungsquellen 22 mit einer externen Stromquelle (nicht gezeigt) verbunden und aktiviert werden.

Ferner können die Strahlungsquellen 22 einen oder mehrere Lichtleiter umfassen, die in dem Konstruktionselement 10 geführt sind und an der Mantelfläche des Befestigungsabschnitts 20 austreten. Der Lichtleiter kann von außerhalb der Öffnung 14 mit aktinischer Strahlung beaufschlagt werden, die dann durch den Lichtleiter in die Öffnung 14 geführt und in die Mörtelmasse 12 eingestrahlt wird.

Bevorzugt nehmen die Strahlungsquellen 22 höchstens 5 Prozent der den Außenumfang des Befestigungsabschnitt 20 umhüllenden Mantelfläche ein, bevorzugt höchstens 2 Prozent, weiter bevorzugt höchstens 1 Prozent und besonders bevorzugt höchstens 0,5 Prozent. Durch die geringe Flächenausdehnung der Strahlungsquellen 22 ist gewährleistet, dass die Haftung des Befestigungsabschnitts 20 in der Mörtelmasse 12 nicht nachteilig beeinflusst wird.

Die Mörtelmasse 12 des erfindungsgemäßen Systems umfasst mindestens eine radikalisch härtbare Verbindung, einen Photoinitiator und zusätzlich mindestens einen wärmelabilen Polymerisationsinitiator sowie wahlweise einen Härtungsbeschleuniger.

Die Komponenten der härtbaren Mörtelmasse 12 des erfindungsgemäßen Systems sind nachfolgend im Einzelnen beschrieben. Einzelne oder mehrere der Komponenten können in technisch sinnvoller Weise miteinander kombiniert werden.

### Radikalisch härtbare Verbindung

Die radikalisch härtbare Verbindung ist bevorzugt eine ethylenisch ungesättigte Verbindung, inbesondere eine Verbindung, die aus der Gruppe der (meth)acrylgruppenhaltigen Verbindungen, Vinylverbindungen, Allylverbindungen und ungesättigten Polyesterharze sowie Kombinationen davon ausgewählt ist. Vinylverbindungen umfassen beispielsweise Styrol und Styrolderivate sowie Vinylether und Vinylester.

Die Mörtelmasse enthält die härtbare Verbindung bevorzugt in einem Anteil von 25 Gew.% bis 99 Gew.%, weiter bevorzugt 50 Gew.% bis 98 Gew.%, und besonders bevorzugt von 65 Gew.% bis 95 Gew.%, jeweils bezogen auf das Gesamtgewicht der Mörtelmasse.

Gemäß einer ersten bevorzugten Ausführungsform umfasst die durch radikalische Polymerisation härtbare Verbindung wenigstens eine (meth)acrylgruppenhaltige Verbindung, einschließlich von Acrylaten, Methacrylaten und/oder mono- oder höherfunktionellen Oligomeren oder Präpolymeren von Acrylaten oder Methacrylaten, wahlweise in Kombination mit einer Vinylverbindung oder einer Allylverbindung.

Besonders bevorzugt weist die (meth)acrylguppenhaltige Verbindung eine Funktionalität von 3 oder höher auf, bezogen auf die Acryl- oder Methacrylgruppen.

Geeignete Acrylate sind beispielsweise 2-(2-Ethoxyethoxy)ethylacrylat (EOEOEA), Tetrahydrofurfurylacrylat (THFA), Laurylacrylat, Phenoxyethylacrylat, Isodecylacrylat, Tridecylacrylat. ethoxyliertes Nonylphenolacrylat, Isobornylacrylat (IBOA), ethoxyliertes Bisphenol A-diacrylat, Polyethylenglykoldiacrylat (PEGDA), alkoxyliertes Diacrylat, propoxyliertes Neopentylglykoldiacrylat (NPGPODA), ethoxyliertes Neopentylglykoldiacrylat (NPGEODA), Hexandioldiacrylat (HDDA), Tetraethylenglykoldiacrylat (TTEGDA), Triethylenglykoldiacrylat (TIEGDA), Tripropylenglykoldiacrylat (TPGDA), Dipropylenglykoldiacrylat (DPGDA), Ditrimethylolpropantetraacrylat (DiTMPTTA), Tris-(2-hydroxyethyl)-isocyanurattriacrylat (THEIC-TA), Dipentaerythritolpentaacrylat (DiPEPA), ethoxyliertes Trimethylolpropantriacrylat (TMPEOTA), propoxyliertes Trimethylolpropantriacrylat (TMPPOTA), ethoxyliertes Pentaerythritoltetraacrylat (PPTTA), propoxyliertes Glyceryltriacrylat (GPTA), Pentaerythritoltetraacrylat (PETTA), Trimethylolpropantriacrylat (TMPTA) und modifiziertes Pentaerythritoltriacrylat.

Als Methacrylate können beispielsweise Allylmethacrylat (AMA). Tetrahydrofurfurylmethacrylat (THFMA), Phenoxyethylmethacrylat, Isobornylmethacrylat, Triethylenglykoldimethacrylat (TIEGDMA), Ethylenglykoldimethacrylat (EGDMA), Tetraethylenglykoldimethacrylat (TTEGDMA), Polyethylenglykoldimethacrylat (PEGDMA), Butandioldimethacrylat (BDDMA), Diethylenglykoldimethacrylat (DEGDMA), Hexandioldimethacrylat (HDDMA), Polyethylenglykoldimethacrylat (PEG600DMA), Butylenglykoldimethacrylat (BGDMA), ethoxyliertes Bisphenol A-dimethacrylat und Trimethylolpropantrimethacrylat (TMPTMA) eingesetzt werden.

Geeignete mono- oder höherfunktionelle Oligomere oder Präpolymere von Acrylaten oder Methacrylaten umfassen beispielsweise Polyester- und/oder Polyether-(meth)acrylate, gegebenenfalls fettsäuremodifizierte Bisphenol-epoxy-(meth)acrylate, epoxidierte Sojabohnenöl-(meth)acrylate, Epoxy-Novolak-(meth)acrylate, aromatische und/oder aliphatische (Meth)acrylat-Oligomere, Epoxy(meth)acrylate, aminmodifizierte Polyether(meth)acylat-Oligomere sowie aromatische und/oder aliphatische, insbesondere hochfunktionelle, Urethan(meth)acrylate.

Ferner kann die radikalisch härtbare Verbindung auch (meth)acrylgruppenhaltige Verbindungen aus der Gruppe von Acrylamid, Methacrylamid, Methylendi(meth)acrylamid und Übergangsmetallnitrat/(Meth)acrylamid-Komplexen umfassen.

Besonders bevorzugt umfasst die acrylgruppenhaltige Verbindung ein aliphatisches Urethan(meth)acrylat mit einer Funktionalität von mindestens 4, bevorzugt mindestens 6, wahlweise alkoxyliertes Trimethylolpropantriacrylat, Pentaerythritoltetraacrylat oder Ditrimethylolpropantetraacrylat und Kombinationen davon.

Gemäß einer weiteren Ausführungsform des erfindungsgemäßen Systems umfasst die Mörtelmasse bevorzugt eine härtbare Verbindung mit einer radikalisch polymerisierbaren Vinylgruppe.

Bevorzugt ist die Vinylverbindung ausgewählt aus Styrol, Methylstyrol, Vinylacetat, Divinylbenzol, einem Alkylvinylether, Alkylvinylester und Mischungen daraus.

Beispiele für auch als Reaktivverdünner für (meth)acrylgruppenhaltige Verbindungen geeignete Alkylvinylether sind Ethylvinylether, n-Butylvinylether, Isobutylvinylether, Octadecylvinylether, Cyclohexylvinylether, Butandioldivinylether, Hydroxybutylvinylether, Cyclohexandimethanolmonovinylether, Diethylengylcoldivinylether, Triethylengylcoldivinylether, n-Propylvinylvinylether, Isopropylvinylether, Dodecylvinylether, Diethylengylcolmonovinylether, r, Cyclohexandimethanoldivinylether, Trimethylolpropantrivinylether und Vinylether, welche beispielsweise durch Addition von Acetylen an Alkohole erhalten werden können, sowie Vinylethergruppen enthaltende Oligomere und Polymere, welche entweder durch Addition von Acetylen an OH-gruppenhaltige Oligomere oder Polymere erhalten werden, oder durch Umsetzung von Alkylvinylethern mit reaktiven Monomeren, Oligomeren und/oder Polymeren, insbesondere durch Umsetzung von Isocyanaten und Isocyanat-Präpolymeren mit hydroxyfunktionellen Alkylvinylethern.

### Radikalischer Photoinitiator

Der in der Mörtelmasse des erfindungsgemäßen Systems enthaltene Photoinitiator ist bevorzugt ein durch UV/VIS-Strahlung aktivierbarer Photoinitiator, vorzugsweise ein durch UV/VIS-Strahlung in einem Wellenlängenbereich von 200 bis 600 nm aktivierbarer Photoinitiator.

Unter "Photoinitiator" wird eine chemische Verbindung verstanden, die nach Absorption von aktinischer Strahlung, insbesondere UV/VIS-Strahlung, zerfällt und eine reaktive Radikale bildet, die unmittelbar oder mittelbar eine Polymerisation starten können, so dass sie die Aushärtung der härtbaren Verbindung bewirken.

Der radikalische Photoinitiator ist vorzugsweise ausgewählt aus Phosphinoxiden, α-Hydroxy-, α-Alkoxy- oder α-Amino-Arylketonen, Campherchinon, Bis-4-(methoxybenzoyl)diethylgermanium oder Mischungen daraus, bevorzugt Acylphosphinoxiden, Campherchinon, Bis-4-(methoxybenzoyl)diethylgermanium oder Mischungen daraus. Die Photoinitiatoren, insbesondere Phosphinoxide und Chinone, können in bekannter Weise mit einem Härtungsbeschleuniger kombiniert werden, beispielsweise einem aromatischen Amin.

Bevorzugt ist der radikalische Photoinitiator in einem Anteil von 0,1 Gew.% bis 5 Gew.%, bevorzugt von 0,25 Gew.% bis 4 Gew.%, bevorzugter von 0,5 Gew.% bis 3 Gew.% und noch bevorzugter von 0,7 Gew.% bis 2,5 Gew.%, bezogen auf das Gesamtgewicht der Mörtelmasse, enthalten.

### Wärmelabiler Polymerisationsinitiator

Der wärmelabile Polymerisationsinitiator für die härtbare Verbindung ist bevorzugt ein Radikalstarter, der durch Erwärmen auf oder über seine Zersetzungstemperatur in reaktive Radikale zerfällt, die eine Polymerisation und/oder Härtungsreaktion auslösen und/oder den Photoinitiator aktivieren und so die Polymerisationsreakton unterhalten.

Der wärmelabile Polymerisationsinitiator ist vorzugsweise in einem Anteil von 0,5 Gew.% bis 10 Gew.% in der Mörtelmasse enthalten, bevorzugt in einem Anteil von 0,75 Gew.% bis 10 Gew.%, bevorzugter von 1 Gew.% bis 10 Gew.%, noch bevorzugter von 1 Gew.% bis 8 Gew.% und noch weiter bevorzugt von 1 Gew.% bis 5 Gew.%, bezogen auf das Gesamtgewicht der Mörtelmasse.

Gemäß einer bevorzugten Ausführungsform ist der wärmelabile Polymerisationsinititiator ausgewählt aus Peroxiden, insbesondere Dialkylperoxiden, wie Di-tert-butylperoxid, Diacylperoxiden, wie Dibenzoylperoxid, Hydroperoxiden, wie tert-Butylhydroperoxid oder Cumolhydroperoxid, Percarbonsäureestern, wie Butylperbenzoat, Perketalen, wie 1,1-Di-tert-butyl-peroxy-3,3,5-trimethylcyclohexan, Natriumpersulfat, Kaliumpersulfat, Ammoniumpersulfaten, einschließlich von Alkylammoniumpersulfaten, Azoverbindungen, wie Azobisisobutyronitril, Benzpinakol und/oder Mischungen daraus.

Besonders bevorzugt ist der wärmelabile Polymerisationsinitiator ein Perketal oder ein Tetraalkylammoniumpersulfat mit 1 bis 10 C-Atomen im Alkylrest, vorzugsweise 1 bis 6 C-Atomen und besonders bevorzugt 1 bis 4 C-Atomen. Ein besonders bevorzugter Polymerisationsinitiator ist Tetra-n-butylammoniumpersulfat.

Vorzugsweise weist der wärmelabile Polymerisationsinitiator eine Zersetzungstemperatur von mindestens 30°C auf, bevorzugt von mindestens 35°C, bevorzugter von mindestens 40°C und noch bevorzugter von mindestens 50°C. Bevorzugt liegt die Zersetzungstemperatur des Polymerisationsinitiators in einem Temperaturbereich von 30°C bis 95°C, bevorzugt 45°C bis 90°C und weiter bevorzugt 55°C bis 80°C.

Vorteilhaft liegt das Gewichtsverhältnis von wärmelabilem Polymerisationsinitiator und Photoinitiator im Bereich von 15:1 bis 1:1, bevorzugt von 15:1 bis 2:1, weiter bevorzugt von 15:1 bis 4:1 und noch bevorzugter von 5:1 bis 1:1.

### Härtungsbeschleuniger

Der wahlweise in der Mörtelmasse enthaltene Härtungsbeschleuniger ist bevorzugt ausgewählt aus der Gruppe bestehend aus tertiären Aminen, wie Dimethylbenzylamin, Imidazolen, Imidazol-Metallkomplexen, oder Mischungen daraus. Geeignet sind ferner stickstoffhaltige Härtungsbeschleuniger, die erst beim Erwärmen über eine Aktivierungstemperatur hinaus aktiv werden und ein Amin freisetzen, schmelzen oder sich in der Harzmischung lösen. Derartige Härtungsbeschleuniger sind beispielsweise aus der DE 10 2007 032 836 A1 bekannt.

Der Härtungsbeschleuniger kann mit dem Photonitiator und/oder dem wärmelabilen Polymerisationsinitiator zusammenwirken und dessen Aktivierung begünstigen. Außerdem kann der Härtungsbeschleuniger den Ablauf der Polymerisationsreaktion beschleunigen.

### Weitere Zusätze

Ferner kann die Mörtelmasse des erfindungsgemäßen Systems wahlweise weitere Zusätze enthalten, bevorzugt einen Zusatz aus der Gruppe der Sensibilisatoren, Verdickungsmittel, Füllstoffe, Farbstoffe, Pigmente, Stabilisatoren, Modifikatioren, Regler, Lösungsmittel und Kombinationen davon.

Sensibilisatoren sind Verbindungen, welche die eingestrahlte Lichtenergie auf den Photoinitiator übertragen und dadurch die Aktivierung des Photoinitiators bewirken. Geeignete Sensibilisatoren zur Verwendung mit Photoinitiatoren sind dem Fachmann bekannt.

Bevorzugt umfasst die Mörtelmasse ein Verdickungsmittel. Das Verdickungsmittel ist bevorzugt ausgewählt aus Kieselsäuren, Silikaten, wie Laponit, Montmorillonit oder Bentonit; organischen Verdickern, wie Amidwachsen oder Rizinusölderivaten, und Mischungen daraus.

Der Anteil an Verdickungsmittel beträgt vorzugsweise 0 Gew.% bis 20 Gew.%, bevorzugt 0,5 Gew.% bis 20 Gew.%, bevorzugter 1 Gew.% bis 10 Gew.% und noch bevorzugter 2 Gew.% bis 5 Gew.%, bezogen auf das Gesamtgewicht der Mörtelmasse.

Weiterhin bevorzugt umfasst die Mörtelmasse des erfindungsgemäßen Systems wenigstens einen Füllstoff. Der Füllstoff kann ein anorganischer und/oder organischer Füllstoff sein. Als Füllstoffe dienen bevorzugt anorganische Füllstoffe insbesondere Zemente wie Portlandzement oder Tonerdeszement sowie andere hydraulisch abbindende anorganische Stoffe, Quarz, Glas, Korund, Porzellan, Steingut, Schwerspat, Leichtspat, Gips, Talkum, Metallpulver, Metallgranulat, hydratisiertes Schichtsilikat und/oder Kreide sowie deren Mischungen. Die anorganischen Füllstoffe können in Form von Sanden, Mehlen oder Formkörpern, vorzugsweise in Form von Fasern oder Kugeln, zugesetzt werden.

Der Anteil an Füllstoffen beträgt vorzugsweise 0 Gew.% bis 90 Gew.%, bevorzugt Gew.% 1 bis 80 Gew.%, bevorzugter 2 Ges.% bis 70 Ges.% und noch bevorzugter 5 Gew.% bis 60 Gew.% und noch weiter bevorzugt 10 Gew.% bis 50 Gew.%, bezogen auf das Gesamtgewicht der Mörtelmasse.

Des Weiteren ist es möglich, zur Einstellung der Viskosität zusätzlich ein inertes Lösungs- und/oder Verdünnungsmittel einzuarbeiten, beispielsweise einen Weichmacher, insbesondere ein Dialkylphthalat oder Dialkyladipat, und/oder Dimethylformamid.

### Anwendung des erfindungsgemäßen Systems

Die Mörtelmasse des erfindungsgemäßen Systems härtet bevorzugt durch eine strahlungsinduzierte radikalische Frontalpolymerisation aus. Gemäß einer besonders bevorzugten Ausführungsform ist die Mörtelmasse des erfindungsgemäßen Systems zusammengesetzt aus a) einer acrylgruppenhaltigen Verbindung, bevorzugt einer acrylgruppenhaltingen Verbindung mit einer Funktionalität von mindestens 3, weiter bevorzugt ein aliphatisches Urethan(meth)acrylat, Pentaerythritoltetraacrylat, Ditrimethylolpropantetraacrylat und/oder Trimethylolpropantriacrylat, b) einem radikalischen Photoinitiator, bevorzugt einem Acylphosphinoxid, Campherchinon, Bis-4-(methoxybenzoyl)diethylgermanium oder Mischungen daraus; c) einem wärmelabilen Polymerisationsinitiator, bevorzugt einem Alkylammoniumpersulfat, Dibenzoylperoxid und Mischungen davon, d) wahlweise einem Härtungsbeschleuniger, bevorzugt einem tertiären Amin wie p-Diethanoltoluidin oder einer wärmeaktivierbaren Stickstoffverbindung, und e) wahlweise weiteren Zusätzen, wie beispielsweise einem Verdicker, bevorzugt pyrogene Kieselsäure, und einem anorganischen Füllstoff, bevorzugt Sand, Quarz, Metallpulver und Kombinationen davon.

Das erfindungsgemäße System wird in einem Verfahren zur Befestigung eines Konstruktionselements in einer in einem tragfähigen Untergrund vorgesehenen Öffnung unter Verwendung der oben beschriebenen härtbaren Mörtelmasse verwendet. Das Konstruktionselement umfasst wenigstens einen Befestigungsabschnitt, der mindestens eine Strahlungsquelle für aktinische Strahlung aufweist. Das Verfahren umfasst die folgenden Schritte:
a) Einbringen einer mittels aktinischer Strahlung härtbaren Mörtelmasse in die Öffnung;
b) Einführen des Befestigungsabschnitts mit der Strahlungsquelle in die mit Mörtelmasse gefüllte Öffnung, wobei die Strahlungsquelle mit der Mörtelmasse in Kontakt gebracht wird, und
c) Aktivieren der Strahlungsquelle in der Mörtelmasse und Bestrahlen der Mörtelmasse mit aktinischer Strahlung, so dass die Mörtelmasse unter Frontalpolymerisation aushärtet.

Der Vorteil des erfindungsgemäßen Verfahrens liegt darin, dass die Polymerisation der Mörtelmasse schnell und zeitgenau gestartet werden kann. Zudem kann das Bestrahlen der Mörtelmasse direkt im Inneren der Öffnung durchgeführt werden. Da die Strahlungsquelle direkt auf dem Befestigungsabschnitt angeordnet ist, kann das Verfahren einfach und schnell durchgeführt werden. Durch das Verfahren wird sichergestellt, dass die Polymerisationsfront homogener und gleichmäßiger durch die im Ringspalt zwischen der Öffnung und dem Befestigungsabschnitt vorhandene Mörtelmasse wandern kann, ohne dass es zu einem Abbruch der Polymerisation kommt. Die Mörtelmasse härtet daher in kurzer Zeit ohne Fehlstellen vollständig aus. Weiterhin kann der Beginn der Aushärtung zeitgenau bestimmt werden, was insbesondere dann vorteilhaft ist, wenn eine Vielzahl von Öffnungen mit Konstruktionselementen zu bestücken sind.

Die Mörtelmasse wird gemäß Schritt a) in die Öffnung eingebracht, die zuvor in dem Untergrund, an dem das Konstruktionselement befestigt werden soll, vorgesehen worden ist. Anschließend wird das mit der Strahlungsquelle bestückte Konstruktionselement in Schritt b) in die mit der Mörtelmasse beschickte Öffnung eingebracht. Die Füllmenge der in die Öffnung eingebrachten Mörtelmasse wird bevorzugt so gewählt, dass der Ringspalt zwischen der Öffnung und dem in Schritt b) in die Öffnung eingebrachten Befestigungsabschnitt des Konstruktionselements vollständig mit Mörtelmasse gefüllt ist und die auf dem Befestigungsabschnitt angeordnete Strahlungsquelle direkt mit der Mörtelmasse in Kontakt steht.

Das Aktivieren der Strahlungsquelle in Schritt c) kann durch Anschließen der Zuleitung für die Strahlungsquelle an eine Stromquelle erfolgen. Durch das Aktivieren der Strahlungsquelle wird aktinische Strahlung, insbesondere Licht mit einer Wellenlänge im UV/VIS-Bereich, von der Strahlungsquelle emittiert und direkt in die mit der Strahlungsquelle in Kontakt stehende Mörtelmasse eingestrahlt.

Die aktinische Strahlung aktiviert den Photoinitator in der Mörtelmasse und setzt eine reaktive Spezies frei, durch welche die Polymerisation der Mörtelmasse in Gang gesetzt wird. Durch die bei der Aktivierung des Photoinitiators und/oder bei der Polymerisationsreaktion freigesetzte Wärme wird der thermisch labile Polymerisationsinitiator und wahlweise der Härtungsbeschleuniger aktiviert, wodurch sich ebenfalls reaktive Spezies bilden, die ihrerseits mit der polymerisierbaren Verbindung in der Mörtelmasse oder mit weiterem Photoinitiator reagieren können. Auf diese Weise schreitet die Polymerisation innerhalb der Mörtelmasse in einer Polymerisationsfront selbsterhaltend fort und die Mörtelmasse härtet durch Frontalpolymerisation aus.

Die Polymerisation der Mörtelmasse in Schritt c) kann durch punktuelles oder flächiges Bestrahlen der an den Befestigungabschnitt angrenzenden Schicht der Mörtelmasse ausgelöst werden. Bevorzugt wird die Polymerisation in Schritt c) durch Bestrahlung im Inneren der Öffnung ausgelöst. Während es möglich ist, die Polymerisation der Mörtelmasse durch Strahlungseintrag von außerhalb der Öffnung auszulösen, ist es erfindungsgemäß bevorzugt, ein punktuelles oder flächiges Bestrahlen der Mörtelmasse innerhalb der Öffnung durch die am Befestigungsabschnitt angeordneten Strahlungsquellen, beispielsweise mit Hilfe von Lichtblitzen, Laserstrahlen, LEDs oder Lichtleitern *in situ* zu bewirken.

Bei der Durchführung des erfindungsgemäßen Verfahrens erfolgt die Auswahl der Dimensionen von Öffnung und Konstruktionselement entsprechend dem Stand der Technik für Injektionssysteme. Dabei wird eine solche Menge der erfindungsgemäßen Mörtelmasse in die vorbereitete Öffnung eingebracht, dass der Ringspalt nach dem Setzen des zu befestigenden Elements vollständig ausgefüllt ist. Erfindungsgemäß ist ein Justieren des Elements möglich, da die Mörtelmasse erst nach kurzzeitigem Bestrahlen während einiger Sekunden aushärtet. Hierbei bildet sich eine Polymerisationsfront, die mit einer hohen Geschwindigkeit durch den Ringspalt fortschreitet, wodurch das Element in der ausgehärteten Mörtelmasse fixiert wird.

Die Mörtelmasse des erfindungsgemäßen Systems weist unter Lichtausschluss bevorzugt eine Topfzeit bei Raumtemperatur (23°C) von mindestens einem Tag auf, bevorzugt von mindestens drei Tagen, bevorzugter mindestens einer Woche und noch bevorzugter von mindestens zwei Wochen.

In dieser Weise wird es möglich, eine Vielzahl von Konstruktionselementen in vorbereitete und bereits mit der Mörtelmasse ausgefüllte Öffnungen, insbesondere Bohrlöcher, einzubringen und nach Befestigung und Ausrichtung sämtlicher Konstruktionselemente eine schnelle, vollständige und vor allem gleichmäßige Aushärtung der Mörtelmasse zu bewirken und damit eine hohe Gleichmäßigkeit und Konstanz der Festigkeit der gesetzten Konstruktionselemente zu erreichen.

Weitere Vorteile der Erfindung ergeben sich aus den nachfolgenden Beispielen, die jedoch in keiner Weise als einschränkend zu verstehen sind. Alle Ausführungsformen der Erfindung können im Rahmen der Erfindung miteinander kombiniert werden.

### Mörtelmassen

Es wurden strahlungsaktivierbare und unter Frontalpolymerisation härtbare Mörtelmassen auf Basis von Acrylaten hergestellt. Als Acrylate wurden in den Beispielen das im Handel unter den Bezeichnung SR 295 (Sartomer) erhältliche Pentaerythritoltetraacrylat und 9fach ethoxyliertes Trimethylolpropantriacrylat (SigmaAldrich) verwendet. Die in den Beispielen eingesetzte Acrylatmischung 1 bestand aus einem Gemisch von 80 Gew.% Pentaerythritoltetraacrylat und 20 Gew.% 9fach ethoxyliertes Trimethylolpropantriacrylat, bezogen auf das Gesamtgewicht der Acrylatmischung.

Ferner wurde ein hexafunktionelles aliphatisches Urethanacrylat eingesetzt, das von der Firma Sartomer erhältlich ist.

Als radikalischer Photoinitiator wurde Bis(4-methoxybenzoyl)diethylgermanium verwendet, das im Handel unter der Bezeichnung Ivocerin (Ivoclar) erhältlich ist, sowie ferner Phenyl-bis-(2,4,6-trimethylbenzoyl)-phosphinoxid (SigmaAldrich) und +/- Campherchinon (SigmaAldrich).

Ethoxyliertes Diethanol-p-toluidin ist im Handel unter der Bezeichnung Bisomer PTE (GEO) erhältlich und wurde als Härtungsbeschleuniger eingesetzt.

Als wärmelabiler Polymerisationsinitiator wurden Tetra-n-butylammoniumpersulfat aus eigener Synthese und Dibenzoylperoxid (20% auf Gips) verwendet, das unter der Bezeichnung Perkadox 20S (Akzo) erhältlich ist. Als weiterer Polymerisationsinitiator wurde 1,1-Di(tert.-butylperoxy)-3,3,5-trimethylcyclohexan (United Initiators) eingesetzt.

Als Verdicker wurde pyrogene Kieselsäure (Aerosil R711 von Evonik) verwendet.

Als Füllstoffe dienten Sand (BSC P10 der Firma Strobel) und Aluminiumpulver (125 - 400µm der Firma Eckart).

Die Zusammensetzung der in den Beispielen 1 bis 6 und den Vergleichsbespielen VB1 und VB2 verwendeten Mörtelmassen ist in der nachfolgenden Tabelle 1 angegeben.

**Tabelle 1: Zusammensetzung der Mörtelmassen**

| | **VB 1** | **VB 2** | **1** | **2** | **3** | **4** | **5** | **6** |
|---|---|---|---|---|---|---|---|---|
| Acrylatmischung 1 | 99 | 94,3 | 94 | 82,7 | 77 | 89,3 | 70,4 | 50 |
| hexafunktionales Urethanacrylat | | | | | | | | 17,2 |
| Bis(4-methoxybenzoyl) diethylgermanium | 1 | 0,94 | 1 | 0,83 | | | 0,6 | 0,8 |
| Phenyl-bis-(2,4,6-trimethyl-benzoyl)-phosphinoxid | | | | | 1,6 | | | |
| +/- Campherchinon | | | | | | 1,5 | | |
| ethoxyliertes Diethanol-p-toluidin | | | | | 0,2 | 0,2 | | |
| Copolymerisat gemäß Beispiel Nr. 19 in DE 10 2007 032836 | | | | | | | | 3 |
| Tetra-n-butylammoniumpersulfat | | | 5 | 4,1 | 4,1 | 5 | | |
| 1,1-Di(tert.-butylperoxy)-3,3,5-trimethylcyclohexan | | | | | | | 4 | 4 |
| Dibenzoylperoxid (20% auf Gips) | | | | | | | 22 | 22 |
| Pyrogene Kieselsäure | | 4,3 | | 4,1 | 4,1 | 4 | 3 | 3 |
| Sand | | | | 8,3 | 8,2 | | | |
| Aluminiumpulver | | | | | 4,8 | | | |

### Auszugsversuche

Zur Bestimmung der Lastwerte wurde eine hochfeste Ankergewindestange M12 mit der Länge 160 mm verwendet.

Als Strahlungsquellen dienten in den Beispielen bereits verdrahtete blaue SMD LEDs #0402 der Firma Extangis Business & Products GmbH, Saarbrücken. Die Ankerstangen wurden mit je 4 LEDs ausgerüstet, die gleichmäßig über die Verbundfläche verteilt und auf die Ankerstangen aufgeklebt wurden. Jede LED hatte eine Fläche von etwa 0,25mm². Daraus ergab sich insgesamt eine belichtete Fläche von etwa 1 mm², entsprechend etwa 0,025% der Verbundfläche.

Die durch Vermischen der in Tabelle 1 aufgeführten Bestandteile erhaltene Mörtelmasse wurde in ein Bohrloch in C20/25 Beton mit einer Bohrlochtiefe von 130 mm und einem Durchmesser von 14 mm eingebracht.

Zur Bestimmung der mit den Mörtelmassen erzielten Lastwerte wurde die Ankergewindestange in das Bohrloch eingeführt. Die vier blauen SMD-LEDs waren hierbei vollständig von der Mörtelmasse bedeckt.

Belichtet wurde jeweils 30 Sekunden, wobei die Spannung von 2,8 V (Nennspannung der LEDs) über diese Zeit auf 3,5 V angehoben wurde, um die maximale Lichtleistung zu erzielen. Eine vollständige Aushärtung wurde innerhalb von 15 min nach der Belichtung erreicht.

Die Versagenslast wurde durch zentrisches Ausziehen der Ankergewindestange mit enger Abstützung ermittelt.

Die mit den Mörtelmassen gemäß den Beispielen 1 bis 6 und den Vergleichsbeispielen VB1 und VB2 erhaltenen Lastwerte sind der folgenden Tabelle 2 zu entnehmen.

**Tabelle 2: Bestimmung der Lastwerte**

| | **VB 1** | **VB 2** | **1** | **2** | **3** | **4** | **5** | **6** |
|---|---|---|---|---|---|---|---|---|
| Versagenslast im Auszugsversuch [kN] | 0,27 | 0,42 | 21 | 68,2 | 43,4 | 32,3 | 23,1 | 30,2 |

Die lichtaktivierbaren und unter Frontalpolymerisation aushärtenden Mörtelmassen der Beispiele 1 bis 6 zeigen eine vollständige Aushärtung, wodurch eine ausrechend hohe Tragfähigkeit erzielt werden konnte. Die Mörtelmasse der Vergleichsbeispiele war dagegen nur stellenweise ausgehärtet, was sich in dem geringen Lastwert zeigt. Die Versuche zeigen, dass durch Bestrahlung einer erfindungsgemäßen Mörtelmasse mit aktinischer Strahlung im UV/VIS-Bereich eine schnelle und sichere Aushärtung hervorgerufen wird.

## Patentansprüche

1. System zur Befestigung eines Konstruktionselements in einer Öffnung, mit
einer durch Frontalpolymerisation härtbaren Mörtelmasse, die durch Einwirken von aktinischer Strahlung aktivierbar ist; und
einem Konstruktionselement, das einen Befestigungsabschnitt umfasst, der wenigstens eine aktinische Strahlung emittierende Strahlungsquelle aufweist.

2. System nach Anspruch 1, wobei die Strahlungsquelle eine LED, eine Mini-LED, und/oder einen Lichtleiter umfasst.

3. System nach einem der vorhergehenden Ansprüche, wobei der Befestigungsabschnitt eine Vielzahl an Strahlungsquellen aufweist, bevorzugt mindestens zwei Strahlungsquellen, bevorzugter mindestens drei Strahlungsquellen und noch bevorzugter mindestens vier Strahlungsquellen.

4. System nach einem der vorhergehenden Ansprüche, wobei der Befestigungsabschnitt eine zylindrische Grundform aufweist, und wobei eine Vielzahl von Strahlungsquellen voneinander beabstandet über eine Mantelfläche der zylindrischen Grundform verteilt sind.

5. System nach einem der vorhergehenden Ansprüche, wobei die Strahlungsquellen punkt- oder scheibenförmig, streifenförmig oder in Form von konzentrischen Ringen ausgebildet sind.

6. System nach einem der vorhergehenden Ansprüche, wobei die Strahlungsquelle wenigstens einen Lichtleiter umfasst, der in dem Konstruktionselement geführt ist und an einer Außenfläche des Befestigungsabschnitts austritt.

7. System nach einem der vorhergehenden Ansprüche, wobei die Strahlungsquelle höchstens 5 Prozent der einen Außenumfang des Befestigungsabschnitt umhüllenden Mantelfläche ein, bevorzugt höchstens 2 Prozent, weiter bevorzugt höchstens 1 Prozent und besonders bevorzugt höchstens 0,5 Prozent.

8. System nach einem der vorhergehenden Ansprüche, wobei die Mörtelmasse mindestens eine radikalisch härtbare Verbindung, einen Photoinitiator und zusätzlich mindestens einen wärmelabilen Polymerisationsinitiator umfasst, und wobei die radikalisch härtbare Verbindung bevorzugt aus der Gruppe der (meth)acrylgruppenhaltigen Verbindungen, Allylverbindungen, Vinylverbindungen und ungesättigten Polyesterharzesowie Kombinationen davon ausgewählt ist.

9. System nach einem der vorhergehenden Ansprüche, wobei die Mörtelmasse eine radikalisch härtbare, (meth)acrylgruppenhaltige Verbindung umfasst, bevorzugt eine acrylguppenhaltige Verbindung mit einer Funktionalität von 3 oder höher, und besonders bevorzugt ein aliphatisches Urethan(meth)acrylat mit einer Funktinalität von mindestens 4, bevorzugt mindestens 6, wahlweise alkoxyliertes Trimethylolpropantriacrylat, Pentaerythritoltetraacrylat oder Ditrimethylolpropantetraacrylat und Kombinationen davon, zusammen mit einem radikalischen Photoinitiator und einem wärmelabilen Polymerisationsinitiator.

10. System nach Anspruch 9, wobei der radikalische Photoinitiator ausgewählt ist aus Phosphinoxiden, α-Hydroxy-, α-Alkoxy- oder α-Amino-Arylketonen, Campherchinon, Bis-4-(methoxybenzoyl)diethylgermanium oder Mischungen daraus, bevorzugt aus Acylphosphinoxiden, Campherchinon, Bis-4-(methoxybenzoyl)diethylgermanium oder Mischungen daraus

11. System nach einem der vorhergehenden Ansprüche 8 bis 10, wobei der wärmelabile Polymerisationsinitiator ein Radikalstarter ist, der durch Erwärmen auf oder über seine Zersetzungstemperatur in reaktive Radikale zerfällt, wobei der Polymerisationsinititiator bevorzugt ausgewählt ist aus Dialkylperoxiden Diacylperoxiden Hydroperoxiden, Percarbonsäureestern, Perketalen, Natriumpersulfat, Kaliumpersulfat, Ammoniumpersulfaten, einschließlich von Alkylammoniumpersulfaten, Azoverbindungen und Mischungen davon.

12. System nach einem der vorhergehenden Ansprüche 8 bis 11, wobei der wärmelabile Polymerisationsinitiator eine Zersetzungstemperatur von mindestens 30°C aufweist, bevorzugt eine Zersetzungstemperatur von 30°C bis 95°C, weiter bevorzugt von 45°C bis 90°C und besonders bevorzugt von 55°C bis 80°C.

13. System nach einem der vorhergehenden Ansprüche, wobei die Mörtelmasse zusammengesetzt ist aus:
einer acrylgruppenhaltigen Verbindung, bevorzugt einer acrylgruppenhaltingen Verbindung mit einer Funktionalität von mindestens 3, weiter bevorzugt ein aliphatisches Urethan(meth)acrylat, Pentaerythritoltetraacrylat, Ditrimethylolpropantetraacrylat und/oder Trimethylolpropantriacrylat;
einem radikalischen Photoinitiator, bevorzugt einem Acylphosphinoxid, Campherchinon, Bis-4-(methoxybenzoyl)diethylgermanium oder Mischungen daraus;
einem wärmelabilen Polymerisationsinitiator, bevorzugt einem Alkylammoniumpersulfat, Dibenzoylperoxid und Mischungen davon;
wahlweise einem Härtungsbeschleuniger, bevorzugt einem tertiären Amin; und
wahlweise weiteren Zusätzen, bevorzugt einem Verdicker und/oder einem anorganischen Füllstoff.

14. Verfahren zur Befestigung eines Konstruktionselements in einer in einem tragfähigen Untergrund vorgesehenen Öffnung unter Verwendung des Systems gemäß einem der vorhergehenden Ansprüche, wobei das Konstruktionselement wenigstens einen Befestigungsabschnitt umfasst, der mindestens eine Strahlungsquelle für aktinische Strahlung aufweist, und wobei das Verfahren die folgenden Schritte umfasst:
a) Einbringen der mittels aktinischer Strahlung aktivierbaren Mörtelmasse in die Öffnung;
b) Einführen des Befestigungsabschnitts mit der Strahlungsquelle in die mit Mörtelmasse gefüllte Öffnung, wobei die Strahlungsquelle innerhalb der Öffnung mit der Mörtelmasse in Kontakt gebracht wird, und
c) Aktivieren der Strahlungsquelle und Bestrahlen der Mörtelmasse mit aktinischer Strahlung aus der Strahlungsquelle, so dass die Mörtelmasse unter Frontalpolymerisation aushärtet.

15. Verfahren nach Anspruch 14, wobei die Polymerisation der Mörtelmasse in Schritt c) durch punktuelles oder flächiges Bestrahlen der an den Befestigungabschnitt angrenzenden Mörtelmasse ausgelöst wird.

16. Verfahren nach Anspruch 14 oder 15, wobei das Bestrahlen der Mörtelmasse innerhalb der Öffnung durch die auf dem Befestigungsabschnitt angeordneten Strahlungsquellen mit Hilfe von Lichtblitzen, Laserstrahlen, LEDs oder Lichtleitern erfolgt.
